# EUROPÄISCHE PATENTSCHRIFT

(11) **EP 1 019 230 B1**
(45) Veröffentlichungstag und Bekanntmachung des Hinweises auf die Patenterteilung: **07.05.2003**
(21) Anmeldenummer: 98950039.2
(22) Anmeldetag: 16.09.1998
(51) Int. Cl.: B29C 33/60, C08K 5/521, C08K 5/19, C08G 18/00

(54) **VERWENDUNG VON VERBESSERTEN, INTERNEN TRENNMITTELN FÜR DIE HERSTELLUNG VON DURCH GLASFASERN UND/ODER NATURFASERN VERSTÄRKTEN POLYURETHANFORMKÖRPERN**
USE OF IMPROVED INTERNAL MOULD RELEASE AGENTS FOR FOR POLYURETHANE MOULDINGS REINFORCED WITH GLASS AND/OR NATURAL FIBERS
UTILISATION D'AGENTS DE DEMOULAGE INTERNES PERFECTIONNES POUR LA FABRICATION DE CORPS MOULES EN POLYURETHANE, RENFORCES DE FIBRES DE VERRE ET/OU DE FIBRES NATURELLES

(30) Priorität: 29.09.1997 DE 19742870
(43) Veröffentlichungstag der Anmeldung: 19.07.2000
(73) Patentinhaber: BAYER AG, 51368 Leverkusen (DE)
(72) Erfinder: HAAS, Peter, D-42781 Haan (DE); PAUL, Reiner, D-42799 Leichlingen (DE)
(86) Internationale Anmeldenummer: EP9805873
(87) Internationale Veröffentlichungsnummer: WO99016602

(56) Entgegenhaltungen:
- EP-A- 0 329 388
- US-A- 4 220 727
- US-A- 4 430 453
- US-A- 4 537 832
- US-A- 4 876 019
- US-A- 5 389 708

## Beschreibung

Die vorliegende Erfindung betrifft die Verwendung von internen Trennmitteln für die Herstellung von durch Glasfasern und/oder Natufasern verstärkten zelligen oder kompakten Polyurethanformkörpern, insbesondere solchen, die mit anderen Materialien kaschiert oder überzogen sind.

Interne Trennmittel für die Herstellung von Polyurethanformkörpern, insbesondere Polyurethanschäumen, sind seit langem bekannt. So werden beispielsweise in DE-A 21 21 670, 19 53 637 und 23 07 589 Trennmittel bei der Herstellung von Schaumstoffen beschrieben, die aus Salzen von aliphatischen Carbonsäuren mit vorzugsweise primären Aminen oder Amid- oder Estergruppen enthaltenden Aminen bestehen, deren Gesamtkohlenstoffzahl mindestens 25 Kohlenstoffatome beträgt.

In US 4.024.088 sind u.a. Organophosphorverbindungen als interne Trennmittel erwähnt, die mindestens 8 Kohlenstoffatome im Molekül enthalten. Weiterhin sind aus US 4.098.731 interne Trennmittel bekannt auf Basis von Metallsalzen einer Carbonsäure, Amidocarbonsäure, Phosphorsäure oder Borsäure in Kombination mit bestimmten tertiären Aminen. US 4.098.731 beschreibt ebenfalls interne Trennmittel bei der Herstellung von Polyurethanformkörpern auf Basis von Salzen von Carbonsäuren mit mindestens 8 Kohlenstoffatomen und tertiären Aminen. Desweiteren sind aus US 4.220.727 interne Trennmittel bekannt, die u.a. bestehen aus Metallsalzen von Fettsäuren und bestimmten quaternären Aralkylammoniumsalzen. Zink-carboxylate mit langkettigen Carboxylresten (8 bis 24 Kohlenstoffatomen) als interne Trennmittel sind bekannt beispielsweise aus US 4.519.965, US 4.581.386 und US 4.111.861. Darüber hinaus ist die Verwendung von höheren Fettsäureestern als Trennmittel aus US 4.130.698 bekannt.

Die bislang bekannten Trennmittel besitzen die verschiedensten Nachteile bei der Herstellung von zelligen oder kompakten Polyurethanformkörpern. So neigen die Metallsalze von höheren Carbonsäuren nach einiger Zeit zur Kristallisation und Gelbildung, wenn sie den Ausgangskomponenten für die Herstellung von Polyurethanformkörpern zugesetzt werden, wodurch die Viskosität und das Fließverhalten der Polyurethanmassen nachteilig verändert werden. Bei anderen Trennmitteln, speziell bei solchen mit unpolaren oder polaren Komponenten, bildet sich wegen der häufig nicht ausreichenden Löslichkeit der Komponenten in den Polyurethanausgangsstoffen ein zweiphasiges System aus, was zu Verarbeitungsschwierigkeiten bei den Polyurethanformmassen führt.

Ein weiterer großer Nachteil der bislang bekannten internen Trennmittel ist das sogenannte Aufbauen in der Form, wodurch sich bei längeren Zyklen die Formkonturen allmählich zusetzen. Die verklebten und mit Polyurethanmassen zugesetzten feinen Formkonturen bei den verwendeten Formen können nur durch anschließendes aufwendiges Reinigen in den ursprünglichen Zustand zurückversetzt werden, was natürlich eine Produktionsunterbrechung erzwingt.

Aufgabe der vorliegenden Erfindung ist es nun, interne Trennmittel zur Verfügung zu stellen, die die oben geschilderten Nachteile der bisherigen Trennmittel vermeiden und daher insgesamt ein verbessertes Eigenschaftsbild aufweisen.

Gegenstand der vorliegenden Erfindung ist deshalb die Verwendung von verbesserten, internen Trennmitteln für die Herstellung von durch Glasfasern und/oder Naturfaser verstärkten Polyurethanformkörpern bestehend aus
a) Ammonium- oder Metallsalze von Phosphorsäureestern der Formel (I) 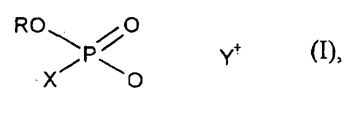 wobei
   - R: für C₁-C₁₀-, bevorzugt C₄-C₈-Alkyl steht,
   - X: OR¹ mit R¹ gleich R oder O⁻Y⁺ bedeutet und
   - Y: für NH₄ und N(R²,R³,R⁴,R⁵) steht, wobei R² bis R⁵ gleich oder verschieden sind und Wasserstoff oder C₁-C₁₀-Alkyl bedeuten, wobei der C₁-C₁₀-Alkylrest durch OR⁶ oder NR⁶R⁷ ein- oder mehrfach substituiert sein kann und R⁶ und R⁷ die Bedeutung für Wasserstoff oder C₁-C₁₀-Alkyl besitzen,
   oder wobei R² bis R⁵ 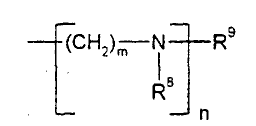 bedeuten,
   worin
   R⁸ und R⁹ gleich oder verschieden sind und für C₁-C₁₀-Alkyl oder Wasserstoff stehen,
   m eine ganze Zahl von 2 bis 4 und
   n eine ganze Zahl von 1 bis 5 bedeuten,
   und wobei mindestens einer der Reste R²,R³,R⁴ oder R⁵ Wasserstoff bedeutet,
   oder
   - Y: für Metalle der ersten Hauptgruppe des Periodensystems der Elemente (Mendelejew) steht,
   und gegebenfalls in Abmischung mit
b) Ammoniumsalze von Carbonsäuren der Formel (II)

   R¹⁰COO⁻ Z⁺ (III),

   worin
   - R¹⁰: für Wasserstoff, C₁-C₉-Alkyl oder C₆-C₁₀-Aryl, das gegebenenfalls durch C₁-C₃-Alkylgruppen substituiert sein kann, steht und
   - Z: die Bedeutung von Y besitzt mit Ausnahme der genannten Metalle der ersten Hauptgruppe des Periodensystems der Elemente,
   und/oder gegebenfalls
c) Ammonium- oder Metallsalze von Sulfonsäuren der Formel (III) 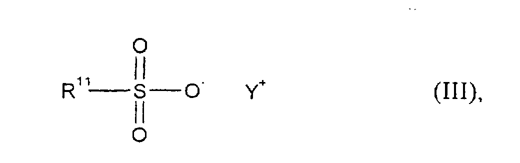
worin
- R¹¹: die Bedeutung von R¹⁰ hat und Y die in Formel (I) angegebene Bedeutung besitzt.

Als C₁-C₁₀-Alkylreste der obengenannten Formeln werden besonders genannt: n-Butyl, iso-Butyl, n- und iso-Pentyl, 2-Ethylhexyl, Octyl, n-Propyl, iso-Propyl, Ethyl, Methyl, Nonyl, Decyl, insbesondere n- und iso-Butyl, n- und iso-Pentyl, 2-Ethylhexyl, Octyl.

Der Rest Y der obengenannten Formel steht besonders bevorzugt für NH₄^{⊕}, N(CH₃)₃H^{⊕}, N(C₂H₅)₃H^{⊕}, N(C₂H₅)₄^{⊕}, HO-CH₂CH₂-N(CH₃)₂H^{⊕}, NH₂(CH₂)₃N(CH₃)₂H^{⊕}, (CH₃)₂N-(CH₂)₃-N(CH₃)₂)H^{⊕}, 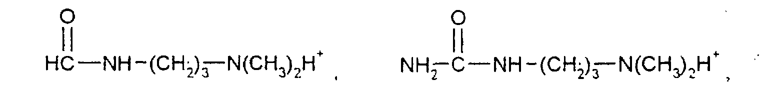 CH₃O-(CH₂)₂-N(CH₃)₂H^{⊕}, HO-CH₂-CH₂-NH₃^{⊕}, (HO-CH₂-CH₂)₂NCH₃H^{⊕},

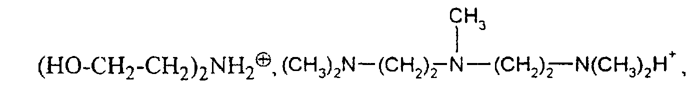

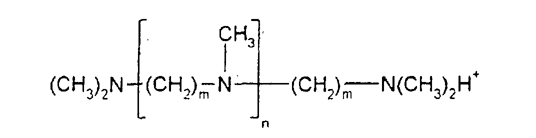

Bevorzugt steht m für eine ganze Zahl von 2 und 3 und n für 1 bis 3.

Als Metalle der ersten Hauptgruppe des Periodensystems der Elemente sind insbesondere zu nennen: Lithium, Natrium, Kalium.

Als Trennmittel für die Herstellung von Polyurethanformkörpern sind folgende Salze besonders geeignet:

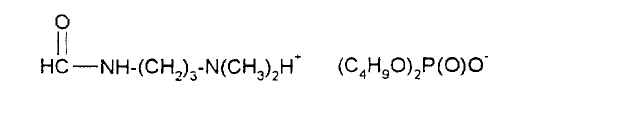

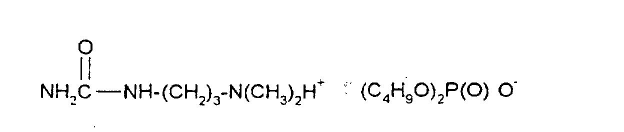

HOCH₂-CH₂NH₃⁺ (C₄H₉O)₂P(O)O⁻

NH₂-(CH₂)₃N(CH₃)₂H⁺ (C₄H₉O)₂P (O)O⁻

^{⊕}NH₃-(CH₂)₃-N(CH₃)₂H⁺ 2(C₄H₉O)₂P(O)O⁻

HO-CH₂-CH₂-NH₃⁺ (C₈H₁₇O)₂ P(O)O⁻

HO-CH₂-CH₂-N(CH₃)₂H⁺ (C₈H₁₇O)₂P(O)O⁻

NH₂-(CH₂)₃N(CH₃)₂H⁺ (C₈H₁₇O)₂P(O)O⁻

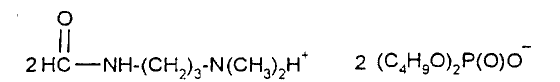

HO-CH₂-CH₂-N(CH₃)₂H⁺ C₇H₁₅-COO⁻

HO-CH₂-CH₂-N(CH₃)₂H⁺ C₆H₁₃-COO⁻

HO-CH₂-CH₂-N(CH₃)₂H⁺ CH₃SO₃⁻

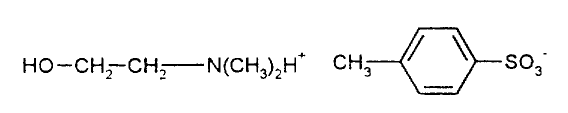

Na⁺(C₄H₉O)₂P(O)O⁻

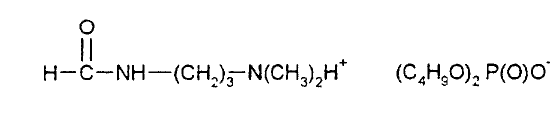

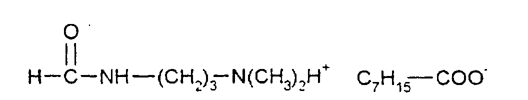

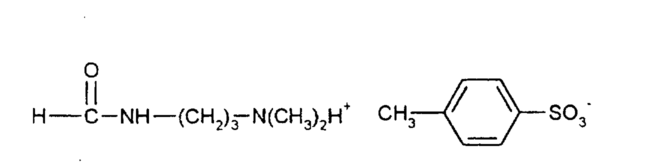

Ganz besonders bevorzugt sind folgende Salze:

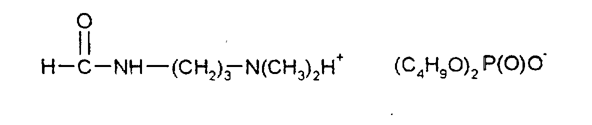

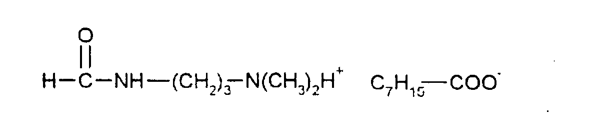

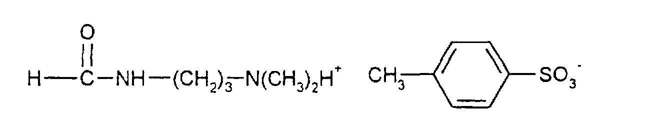

Wie erwähnt, eignen sich die erfindungsgemäßen Trennmittel für die Herstellung von zelligen oder kompakten Polyurethanformkörpern.

Die Polyurethanformkörper können in üblicher Weise hergestellt werden durch Umsetzung von
a) Polyisocyanaten oder Polyisocyanatprepolymeren mit
b) mindestens einer mit mindestens zwei gegenüber Isocyanaten reaktiven Gruppen aufweisenden Verbindung mit einem Molekulargewicht von 400 bis 10 000, gegebenenfalls in Gegenwart von Kettenverlängerern vom Molekulargewicht von 32 bis 399, wobei die Umsetzung der Komponenten a) und b) gegebenenfalls in Gegenwart von Wasser und/oder organischen Treibmitteln, Stabilisatoren, Aktivatoren sowie weiteren an sich bekannten Hilfs- und Zusatzstoffen durchgeführt werden kann.

Zusätzlich zu den obengenannten Additiven können den erhaltenen Polyurethanmassen bei der Verarbeitung noch organische sowie anorganische Füllstoffe zur Verstärkung der Formkörper zugegeben werden. Genannt seien beispielsweise Glasfasern, Wollastonit, Sisal, Flachs, Jute, Hanf und/oder Holzspäne.

Als Stabilisatoren kommen vor allem Polyethersiloxane in Frage. Diese Verbindungen sind im allgemeinen so aufgebaut, daß ein kurzkettiges Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 sowie US-PS 2 917 480 beschrieben.

Als Katalysatoren sind z.B. zu nennen: tertiäre Amine, wie Triethylamin, Tributylamin, N-Methyl-morpholin, N-Ethyl-morpholin, N,N,N',N'-Tetramethyl-ethylendiamin, Pentamethyl-diethylentriamin und höhere Homologe (DE-A 2 624 527 und 2 624 528), 1,4-Diazabicyclo-(2,2,2)-octan, N-Methyl-N'-dimethylaminoethylpiperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butandimin, N,N-Dimethyl-β-phenylethylamin, 1,2-Dimethylimidazol, 2-Methylimidazol, monocyclische und bicyclische Amidine sowie Bis-(dialkylamino)-alkyl-ether wie 2,2-Bis-(dimethylaminoethyl)-ether, jedoch auch Metallcarboxylate wie Kaliumacetat oder Kaliumoctoat.

Als Katalysatoren können auch organische Metallverbindungen, insbesondere organische Zinnverbindungen, verwendet werden. Als organische Zinnverbindungen kommen neben schwefelhaltigen Verbindungen, wie Di-n-octyl-zinnmercaptid, vorzugsweise Zinn(II)-salze von Carbonsäuren, wie Zinn(II)-acetat, Zinn(II)-octoat, Zinn-(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat, in Betracht.

Um beispielsweise zellige Polyurethanformkörper zu erhalten, kann die Umsetzung der Komponente a) mit der Komponente b) wie erwähnt mit Wasser und/oder organischen Treibmitteln durchgeführt werden. Als organische Treibmittel kommen alle bekannten Treibmittel in Frage, insbesondere Kohlenwasserstoffe, wie n-Pentan, c-Pentan und iso-Pentan, sowie fluorierte Kohlenwasserstoffe, wie Tetrafluorethan und Monofluordichlorethan.

Als Polyisocyanate oder Polyisocyanatprepolymere (Komponente a)) kommen die bekannten aliphatischen, cycloaliphatischen, araliphatischen, vorzugsweise die aromatischen, mehrwertigen Isocyanate in Frage, wie sie beispielsweise in EP-A 364 858 genannt sind. Besonders geeignet sind die Toluylendiisocyanate und die Diphenylmethandiisocyanate, deren Modifizierungsprodukte oder ihre entsprechenden Prepolymere, die durch Urethan-, Harnstoff-, Biuret-, Allophanat-, Carbodiimid- oder Uretdion-Gruppen modifiziert sein können. Insbesondere werden als aromatische Polyisocyanate genannt: 4,4'-Diphenylmethandiisocyanat, Mischungen aus 2,4'- und 4,4'-Diphenylmethandiisocyanat oder Roh-Methyldiisocyanat-Typen.

Als Reaktionskomponente b) eignen sich insbesondere Polyole oder Polyolgemische, die eine OH-Zahl von 20 bis 1800 aufweisen, wobei eine mittlere OH-Zahl von insgesamt 300 bis 900 eingestellt wird. Die Einzelkomponenten b) besitzen ein mittleres Molekulargewicht von 400 bis 10 000.

Insbesondere bewährt haben sich Polyole aus der Gruppe der Polyether- und Polyesterpolyole, wie sie durch Addition von Alkylenoxid, wie Ethylenoxid oder Propylenoxid, an mehrfunktionellen Startern, wie Ethylenglycol, Propylenglycol, Glycerin, Trimethylolpropan, Sorbit, Ethylendiamin oder durch Kondensation von Dicarbonsäuren, wie Adipinsäure, Bernsteinsäure, Glutarsäure, Korksäure, Sebacinsäure, Maleinsäure, Phthalsäure, mit überwiegend bifunktionellen Hydroxykomponenten, wie Ethylenglycol, Propylenglycol und Diethylenglycol, erhalten werden.

Als Kettenverlängerer, die zusammen mit der Komponente b) bei der Umsetzung eingesetzt werden können, eignen sich insbesondere Verbindungen mit Molekulargewichten von 32 bis 399. Genannt seien: Ethylenglycol, 1,4-Butandiol, Glycerin, Addukte aus Trimethylolpropan, Glycerin, Pentaerythrit, Sorbit mit Propylenoxid und/oder Ethylenoxid.

Die erfindungsgemäßen Trennmittel werden üblicherweise in Mengen von 0,5 bis 20, bevorzugt 1 bis 15 Gew.-Teilen, bezogen auf 100 Gew.-Teile der Reaktivkomponente b) eingesetzt.

Mit Hilfe der erfindungsgemäßen internen Trennmittel können beispielsweise zellige Polyurethanformkörper im Formschaumverfahren hergestellt werden, indem man in geschlossenen Formen unter Aufschäumen eines Reaktionsgemisches aus Polyisocyanaten, Verbindungen mit reaktiven Wasserstoffatomen, Wasser und/oder organischen Treibmitteln und gegebenenfalls weiteren Hilfs- und Zusatzstoffen unter Mitverwendung der obengenannten internen Trennmittel bei Werkzeugtemperaturen von vorzugsweise ca. 60-75°C arbeitet. Die Herstellung von Polyurethanformkörpern ist beispielsweise beschrieben in Kunststoffhandbuch, Band 7, Polyurethane, 3. neu bearbeitete Auflage, Carl Hanser Verlag, München/Wien, 1993.

Die Herstellung entsprechender Naturfasermatten- bzw. Glasfasermatten- verstärkter PUR-Formkörpern aus blähmittelfreien oder fast blähmittelfreien PUR-Reaktionsgemischen erfolgt nach dem Formpreßverfahren bei Werkzeugtemperaturen von ca. 95 bis 135°C.

Wie bereits zuvor erwähnt, bewirken die erfindungsgemäßen Trennmittel ein hervorragendes Trennvermögen, ein gutes Fließ- und Tränkungsverhalten bei den Einsatzkomponenten a) und b) zur Herstellung der Polyurethanmassen und neigen nicht zum Aufbau in der Form, d.h. eine Verschmutzung der Form durch sich absetzende Polyurethanmassen wird vermieden.

### Beispiele

### Beschreibung der Rohstoffe

### 1) Erfindungsgemäße Trennkomponenten (TK)

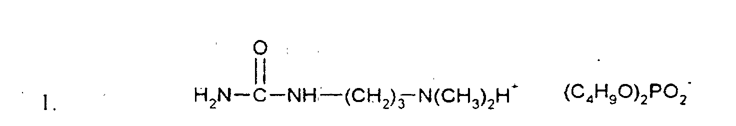

Aus 210 g (1 mol) Dibutylphosphat durch Zutropfen von 145 g (1 mol) 3-Dimethylaminopropylharnstoff bei 30°C:
Säurezahl: 158 mg KOH/g
Fp.: 105°C

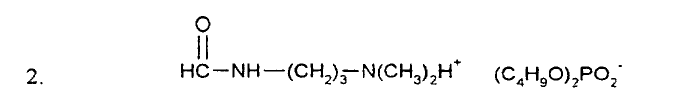

Aus 210 g (1 mol) Dibutylphosphat durch Zutropfen von 130 g (1 mol) 3-Dimethylaminopropylformamid bei 30°C:
Säurezahl: 165 mg KOH/g
Fp.: 35°C

3. HOC₂H₄-N(CH₃)₂H⁺ (C₄H₉O)₂PO₂⁻

Aus 210 g (1 mol) Dibutylphosphat durch Zutropfen von 89 g (1 mol) N,N-Dimethylethanolamin.
Säurezahl: 187 mg KOH/g

4. HOC₂H₄-N(CH₃)₂H⁺ (C₈H₁₇O)₂PO₂⁻

Aus 322 g (1 mol) Bis-2-ethylhexylphosphat durch Zutropfen von 89 g (1 mol) N,N-Dimethylethanolamin.
Säurezahl: 135 mg KOH/g

5. HOCH₂CH₂N(CH₃)₂H⁺ C₇H₁₅-COO-

Aus 144 g (1 mol) 2-Ethylhexansäure und 89 g (1 mol) N,N-Dimethylethanolamin.
Säurezahl: 240 mg KOH/g

6. HOCH₂CH₂N(CH₃)₂H⁺ CH₃C₆H₄-SO3⁻

Aus 172 g (1 mol) 4-Methylbenzolsulfonsäure und 89 g (1 mol) N,N-Dimethylethanolamin.
Säurezahl: 213 mg KOH/g

### II) Polyole

### Polyol 1

Polyetherpolyol der OH-Zahl 470, hergestellt durch Addition von Propylenoxid an ein Startergemisch aus 80 Gew.-Teilen Zucker, 15 Gew.-Teilen Propylenglycol und 5 Gew.-Teilen Wasser.

### Polyol 2

Polyetherpolyol der OH-Zahl 380, hergestellt durch Addition von Propylenoxid an ein Startergemisch aus 45 Gew.-Teilen Zucker, 50 Gew.-Teilen Diethylenglycol, 5 Gew.-Teilen Wasser.

### Polyol 3

Polyetherpolyol der OH-Zahl 865, hergestellt durch Addition von Propylenoxid an Trimethylolpropan.

### Polyol 4

Polyetherpolyol der OH-Zahl 515, hergestellt durch Addition von Propylenoxid an Propylenglycol.

### Polyol 5

Polyetherpolyol der OH-Zahl 475, hergestellt durch Addition von Propylenoxid an ein Startergemisch aus 80 % Zucker und 20 % Propylenglycol.

### Polyol 6

Polyetherpolyol der OH-Zahl 1000, hergestellt durch Addition von Propylenoxid an Trimethylolpropan.

### Polyol 7

Polyetherpolyol der OH-Zahl 640, hergestellt durch Addition von Propylenoxid an Ethylendiamin als Starter.

### Polyol 8

Polyetherpolyol der OH-Zahl 480, hergestellt durch Addition von Propylenoxid an Ethylendiamin als Starter.

### Polyol 9

Polyetherpolyol der OH-Zahl 42, hergestellt durch Addition von 86 % Propylenoxid und 14 % Ethylenoxid an Propylenglycol als Starter.

### III Polyisocyanate

Polyisocyanat, hergestellt durch Umsetzung von Fettsäurepolyester C der DE-OS 2 307 589 zum Prepolymer gemäß Beispiel 1 der DE-OS 2 307 589 mit einem NCO-Gehalt von 28,4 %.

### Ausführungsbeispiele

Die Reaktionskomponenten wurden zur Herstellung von dünnwandigen Verkleidungsteilen und Plattenmustern eingesetzt. Die Fertigung erfolgte unter den üblichen PUR-Verarbeitungsbedingungen.

Die Rohstofftemperaturen bei der Verarbeitung lagen zwischen 25 und 30°C.

### Rezeptur 1

| | | |
|---|---|---|
| Polyol 1 | 40 | Gew.-Teile |
| Polyol 2 | 50 | " |
| Polyol 3 | 10 | " |
| Komp. TK 1 | 10 | " |
| Dibutylzinndilaurat (DBTDL) | 0,15 | " |
| K-Acetat (25 %ig in DEG) | 0,5 | " |
| Polyisocyanat 1 | 129 | " |

Ca. 250 g der Rezeptur 1 wurden beidseitig auf eine Naturfasermatte aus Sisal/Flachs (1:1) vom Flächengewicht 1000 g/m² aufgebracht und dann in einer Stahlform mit einer Fläche von ca. 1 m² bei einer Temperatur von 125-135°C 60-80 sec. auf eine Wandstärke von 1,8-2 mm verpreßt.

Nach Öffnen der Form war das Formteil ohne Entformungshilfen zu entnehmen. Es wurden mehr als 250 Entformungen ohne sichtbaren Formaufbau durchgeführt, eine Trennung war bei der ersten Entformung gegeben.

### Rezeptur 2

Analog Rezeptur 1, anstelle von TK 1 wurden 10 Gew.-Teile Komponente TK 2 verwendet und entsprechend verarbeitet.

Das Formteil verließ die Form mit der ersten Entformung problemlos, es war kein stofflicher Aufbau in der Form nach längerem Produktionslauf festzustellen.

### Rezeptur 3

Analog Rezeptur 1, anstelle von TK 1 wurden 8 Gew.-Teile Komponente TK 3 gelöst und entsprechend verarbeitet.

Das Verkleidungsteil verließ die Form problemlos, ein stofflicher Aufbau in der Form war auch nach längerer Laufzeit nicht festzustellen.

### Rezeptur 4

Analog Rezeptur 1, anstelle von TK 1 wurden 8 Gew.-Teile Komponente TK 4 verwendet.

Das Formteil trennte etwas ungünstiger aus dem Werkzeug als bei Rezeptur 3, ein Aufbau war nach längerem Produktionslauf nicht feststellbar.

### Rezeptur 5

Analog Rezeptur 1, anstelle von TK 1 wurden 10 Gew.-Teile Komponente TK 5 verwendet.

Die Türverkleidung verließ das Werkzeug von Anfang an problemlos, ein Aufbau war nach längerer Fertigungsdauer nicht festzustellen

### Rezeptur 6

Analog Rezeptur 1, anstelle von TK 1 wurden 10 Gew.-Teile Komponente TK 6 verwendet.

Die Türverkleidung verließ das Werkzeug problemlos, ein Werkzeugaufbau in der Form war nach längerer Laufzeit nicht feststellbar.

Die guten Verarbeitungseigenschaften der o.a. Rezepturvarianten wurden dadurch unterstrichen, daß in Formen mit teilweisem Aufbau bedingt durch den Einsatz von Rezepturen auf Basis konventioneller interner Trennmittelkompositionen, sofort eine gute Trennungswirkung gegeben war und der Aufbau im Laufe der weiteren Fertigung verschwand.

Weiterhin vorteilhaft war die problemlose Verklebung von Befestigungselementen und Inserts aus Kunststoff. Diese wurden in das Werkzeug eingelegt und während der Formpressung mit der PUR-Matrix verbunden. Abreißtests belegten gute Haftungsergebnisse mit kohäsivem Bruchverhalten.

Alle Formulierungen waren für mindestens 6 Monate lagerstabil und ohne Reaktivitätsabfall.

Verwendete man in den Formulierungen 1 bis 6 gemäß US-PS 4 585 803, Beispiel 3, als Trennmittel 5 Teile Zinkstearat, gelöst in 5 Teile Amin 5 als Löslichkeitsvermittler, so erhielt man zunächst eine klare Lösung, die jedoch innerhalb einer Woche eintrübte, gelierte und in der Viskosität stark anstieg. Sie ließ sich wesentlich schlechter verarbeiten und auf die verwendeten Naturfasermatten auftragen. Auch das Fließverhalten bzw. Durchtränken der Naturfasermatten beim Preßvorgang wurde negativ beeinflußt.

### Rezeptur 7

| | | |
|---|---|---|
| Polyol 3 | 30 | Gew.-Teile |
| Polyol 6 | 20 | " |
| Polyol 9 | 33,5 | " |
| Polyurax SR 242 (Fa. OSi) | 2,3 | " |
| Thancat AN 10 (Fa. Air Products) | 1,3 | " |
| Essigsäure | 0,3 | " |
| Wasser | 1,4 | " |
| Baydur Schwarzpaste DN (Fa. Bayer AG) | 3,3 | " |
| Komponente TK 4 | 8 | " |
| Polyisocyanat 1 | 154 | " |

Die Rezeptur wurde unter den für die Verarbeitung von Polyurethanrohstoffen üblichen Bedingungen in eine Stahlform der Größe 600 x 1000 x 3 mm eingebracht, die eine Glasmatte des Flächengewichts 600 g/m² als Einlage enthielt. Die Werkzeugtemperatur betrug ca. 75°C. Es resultierte eine Gesamtrohdichte von 950 kg/m³. Die Entformungszeit betrug 120 sec.

Die Formteile waren problemlos mit dem ersten Teil aus der geöffneten Form zu entnehmen, ohne daß es nach größeren Entformungszahlen zu einem Produktaufbau in der Form kam.

### Rezeptur 8

Formulierung analog 7, wobei Komponente TK 4 gegen 8 Gew.-Teile durch Erwärmen aufgelöste Komponente TK 1 ausgetauscht wurde.

Die Platte fiel beim Öffnen aus der Form. Ein Aufbau in der Form durch sich allmählich festsetzende Rohstoffe war auch bei hohen Stückzahlen nicht zu beobachten.

Die Nachverarbeitung der hergestellten Formteile, wie Ausschäumen von halbharten PUR-Schaumstoffsystemen, Aufkaschieren von Folien und Dekoren, z.B. auf Basis von ABS, PVC, TPO und gesperrten Textilien sowie Verkleben mit geeigneten 2K-PUR-Klebstoffen gelang ohne aufwendige Nachbehandlung problemlos.

Nach dem Verfahren lassen sich Automobilaußen- und Innenteile wie Türverkleidungen, Sitzschalen sowie Wannen, A-, B-, C-Säulenverkleidungen, Hutablagen, Kofferraumabdeckungen, Schiebedachkassetten, Instrumententafelträger und Motorraumverkapselungen fertigen.

## Patentansprüche

1. Verwendung von internen Formtrennmitteln für die Herstellung von durch Glasfasern und/oder Naturfasern verstärkten Polyurethanformkörpern, wobei die Formtrennmittel bestehen aus
a) Ammonium- oder Metallsalze von Phosphorsäureestern der Formel (I) 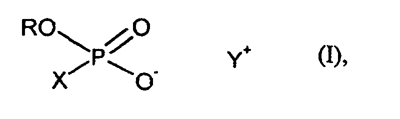 wobei
R für C₁-C₁₀-Alkyl steht,
X OR¹ mit R¹ gleich R oder O⁻Y⁺ bedeutet und
Y für NH₄ und N(R²,R³,R⁴,R⁵) steht, wobei R² bis R⁵ gleich oder verschieden sind und Wasserstoff oder C₁-C₁₀-Alkyl bedeuten, wobei der C₁-C₁₀-Alkylrest durch OR⁶ oder NR⁶R⁷ ein- oder mehrfach substituiert sein kann und R⁶ und R⁷ die Bedeutung für Wasserstoff oder C₁-C₁₀-Alkyl besitzen,
oder wobei R² bis R⁵ 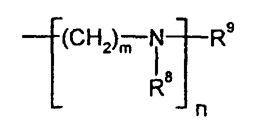 bedeuten,
worin
R⁸ und R⁹ gleich oder verschieden sind und für C₁-C₁₀-Alkyl oder Wasserstoff stehen und
m eine ganze Zahl von 2 bis 4 und
n eine ganze Zahl von 1 bis 5 bedeuten,
und wobei mindestens einer der Reste R², R³, R⁴ oder R⁵ Wasserstoff bedeutet,
oder
Y für Metalle der ersten Hauptgruppe des Periodensystems der Elemente (Mendelejew) steht,
und gegebenenfalls in Abmischung mit
b) Ammoniumsalze von Carbonsäuren der Formel (II)
R¹⁰COO⁻ Z⁺ (II),
worin
R¹⁰ für Wasserstoff, C₁-C₉-Alkyl oder C₆-C₁₀-Aryl, das gegebenenfalls durch C₁-C₃-Alkylgruppen substituiert sein kann, steht und
Z die Bedeutung für Y besitzt mit Ausnahme der genannten Metalle der ersten Hauptgruppe des Periodensystems der Elemente,
und/oder gegebenenfalls
c) Ammonium- oder Metallsalze von Sulfonsäuren der Formel (III) 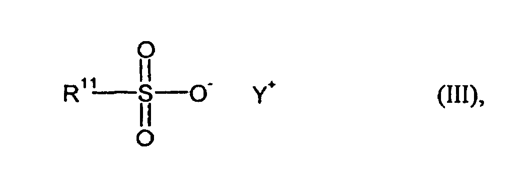
worin
R¹¹ die Bedeutung von R¹⁰ besitzt und Y die in Formel (I) angegebene Bedeutung hat.

## Claims

1. Use of internal mould release agents for producing glass fibre- and/or natural fibre-reinforced polyurethane mouldings, wherein the mould release agents consist of
a) ammonium or metal salts of phosphoric acid esters of the formula (I) 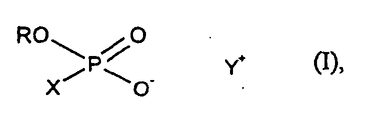 wherein
R stands for C₁-C₁₀ alkyl,
X denotes OR¹, with R¹ being equal to R or O-Y⁺ and
Y stands for NH₄ and N(R²,R³,R⁴,R⁵), wherein R² to R⁵ are the same or different and denote hydrogen or C₁-C₁₀ alkyl, wherein the C₁-C₁₀ alkyl residue may be mono- or polysubstituted by OR⁶ or NR⁶R⁷ and R⁶ and R⁷ have the meaning of hydrogen or C₁-C₁₀ alkyl,
or wherein R² to R⁵ signify 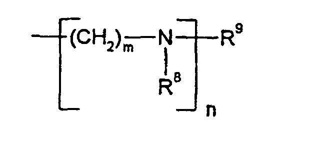 in which
R⁸ and R⁹ are the same or different and stand for C₁-C₁₀ alkyl or hydrogen, and
m is a whole number from 2 to 4 and
n is a whole number from 1 to 5,
and wherein at least one of the residues R², R³, R⁴ or R⁵ denotes hydrogen
or
Y stands for metals of the first main group of the periodic system of elements (Mendeléeff),
and optionally blended with
b) ammonium salts of carboxylic acids of the formula (II)
R¹⁰COO⁻ Z⁺ (II),
in which
R¹⁰ stands for hydrogen, C₁-C₉ alkyl or C₆-C₁₀ aryl, which may optionally be substituted by C₁-C₃ alkyl groups, and
Z has the meaning of Y with the exception of the above-mentioned metals of the first main group of the periodic system of elements,
and/or optionally
c) ammonium or metal salts of sulfonic acids of the formula (III) 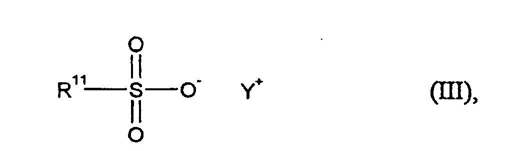 in which
R¹¹ has the meaning of R¹⁰ and Y has the meaning given in formula (I).

## Revendications

1. Utilisation d'agents de démoulage internes pour la préparation d'articles moulés en polyuréthanne, renforcés par des fibres de verre et/ou des fibres naturelles, où les agents de démoulage consistent en :
a) des sels d'ammonium ou métalliques d'esters d'acide phosphorique de la formule (I) : 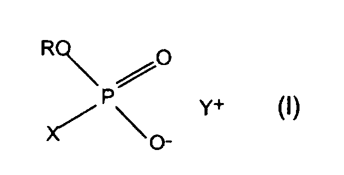 où
R représente un radical alcoyle en C₁-C₁₀ ;
X représente OR¹ avec R¹ identique à R ou O⁻Y⁺, et
Y représente NH₄ et N(R²R³R⁴R⁵), où R² à R⁵ sont identiques ou différents et représentent l'atome d'hydrogène ou un radical alcoyle en C₁-C₁₀, où le reste alcoyle en C₁-C₁₀ peut être substitué une ou plusieurs fois, par OR⁶ ou NR⁶R⁷ et R⁶ et R⁷ possèdent la signification de l'atome d'hydrogène ou d'un radical alcoyle en C₁-C₁₀, ou
R² à R⁵ représentent : 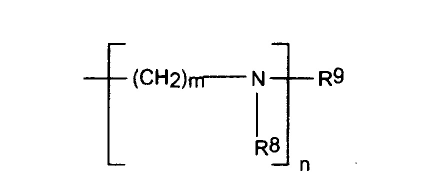 où
R⁸ et R⁹ sont identiques ou différents et représentent un radical alcoyle en C₁-C₁₀ ou l'atome d'hydrogène,
m représente un nombre entier allant de 2 à 4, et
n représente un nombre entier allant de 1 à 5, et
où au moins l'un des restes R², R³, R⁴ ou R⁵ représente l'atome d'hydrogène, ou
Y représente un métal du premier groupe principal du système périodique des éléments (Mendéléïev),
et le cas échéant en mélange avec
b) des sels d'ammonium d'acide carboxylique de la formule (II) :
R¹⁰COO⁻ Z⁺ (II)
où
R¹⁰ représente l'atome d'hydrogène, un radical alcoyle en C₁-C₉, ou un radical aryle en C₆-C₁₀, qui peut être le cas échéant substitué par des radicaux alcoyle en C₁-C₃, et
Z possède la signification de Y à l'exception des métaux indiqués du premier groupe principal du système périodique des éléments,
et/ou le cas échéant,
c) des sels d'ammonium ou métalliques d'acides sulfoniques de la formule (III) : 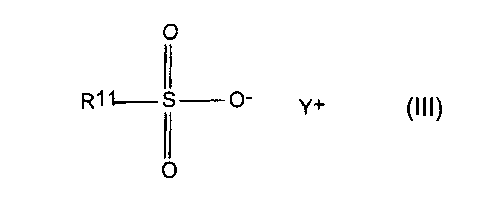
où
R¹¹ a la signification de R¹⁰ et Y a la signification donnée pour la formule (I).
